# EUROPÄISCHE PATENTSCHRIFT

(11) **EP 3 233 569 B1**
(45) Veröffentlichungstag und Bekanntmachung des Hinweises auf die Patenterteilung: **20.01.2021**
(21) Anmeldenummer: 15807667.9
(22) Anmeldetag: 09.12.2015
(51) Int. Cl.: B60Q 1/00, F21S 43/14, F21S 43/19, F21S 43/237, F21S 43/245, F21S 43/27, F21S 43/30, F21S 43/31, F21S 43/37, F21S 43/40, F21S 45/48, F21S 41/29

(54) **LEUCHTVORRICHTUNG FÜR EIN KRAFTFAHRZEUG**
LIGHTING DEVICE FOR A MOTOR VEHICLE
DISPOSITIF D'ÉCLAIRAGE POUR VÉHICULE À MOTEUR

(30) Priorität: 16.12.2014 DE 102014226029; 08.12.2015 DE 102015121324
(43) Veröffentlichungstag der Anmeldung: 25.10.2017
(73) Patentinhaber: Volkswagen AG, 38440 Wolfsburg (DE); Marelli Automotive Lighting Reutlingen (Germany) GmbH, 72762 Reutlingen (DE)
(72) Erfinder: SOLA GOMFAUS, Andreu, 08013 Barcelona (DE); SCHITTECK, Jan-Peter, 38104 Braunschweig (DE); STINDL, Olaf, 38102 Braunschweig (DE); TÖLLE, Pia, 72764 Reutlingen (DE); TRIF, Theodor, 72644 Oberboihingen (DE)
(74) Vertreter: Gulde & Partner
(86) Internationale Anmeldenummer: PCT/EP2015/079096
(87) Internationale Veröffentlichungsnummer: WO 2016/096563

(56) Entgegenhaltungen:
- EP-A2- 1 243 467
- EP-A2- 2 796 772
- WO-A1-2012/120441
- WO-A1-2013/104345
- JP-A- 2011 034 729
- US-A1- 2012 069 592
- US-A1- 2013 242 583
- US-A1- 2013 265 790

## Beschreibung

Die Erfindung betrifft eine Leuchtvorrichtung für ein Kraftfahrzeug, insbesondere eine Leuchtvorrichtung mit mindestens einer ersten Lichtfunktion und einer weiteren Lichtfunktion.

Zusätzlich zu der Lichtfunktion des Abblendlichtes und des Fernlichtes übernehmen Leuchtvorrichtungen für Kraftfahrzeuge zunehmend die weitere Lichtfunktion des Tagfahrlichtes oder Positionslichtes. Aufgrund seiner oftmals markanten Form, wird das Tagfahrlicht auch als Signatur bezeichnet.

Die Bedeutung von Licht im Straßenverkehr und auch von Ambientelicht in und an einem Kraftfahrzeug hat in den letzten Jahren stetig zugenommen. Unter anderem ist dies darauf zurückführbar, dass Fahrzeugscheinwerfer oftmals als herausstechende Designmerkmale eines Kraftfahrzeuges beziehungsweise eines Herstellers angesehen werden. Die derzeit bekannten Beleuchtungssysteme sind oft komplex im Aufbau beziehungsweise sehr aufwendig im Hinblick auf die benötigten Bauteile.

DE 10 2006 027 970 A1 offenbart eine Scheinwerfereinheit für ein Fahrzeug mit einem Tagfahrlicht, wobei ein Tubus eines Fern- oder Fahrlichtes von einem transparenten Hohlkörper als Lichtleiteinrichtung für das Tagfahrlicht koaxial umschlossen ist. Von dieser ringförmigen Stirnfläche wird ein Bestandteil des Tagfahrlichtes ausgestrahlt und ergänzt ein deutlich gedimmtes Fahr- oder Fernlicht als weiteren Bestandteil des Tagfahrlichtes.

DE 103 38 788 A1 offenbart eine Signalleuchte für Fahrzeuge, mit einem Lichtleiter, dessen Rückfläche mindestens bereichsweise reflektierend ausgebildet ist.

EP 1 243 467 A2 offenbart einen Scheinwerfer für Fahrzeuge der ein Projektionsmodul aufweist, welches aus einem scheinförmigen Reflektor und einem im Inneren des Reflektors angeordneten Lichtquelle sowie einer das Licht des Reflektors sammelnden Linse besteht.

Die Linse ist von einem Lichtleitring umgegeben die in nicht Abstrahlrichtung vor dem Lichtaustrittsbereich der Linse angeordnet ist.

US 2012/0069592 A1 offenbart eine Leuchtvorrichtung für ein Kraftfahrzeug mit einem Lichtaustrittsbereich, dem eine erste Lichtfunktion zugeordnet ist. Der Lichtaustrittsbereich ist von einem Reflektor umgeben, der ein Lichtleitelement aufnimmt, dem eine weitere Lichtfunktion zugeordnet ist.

Der Erfindung liegt die Aufgabe zugrunde, eine Leuchtvorrichtung mit einfachem Aufbau zur Verfügung zu stellen, bei der eine gegenseitige Beeinflussung von Lichtfunktion untereinander verhindert wird.

Die Aufgabe wird erfindungsgemäß mit einer Leuchtvorrichtung gemäß Anspruch 1 gelöst.

Weitere bevorzugte Ausgestaltungen der Erfindung ergeben sich aus den übrigen, in den Unteransprüchen genannten Merkmalen.

Die erfindungsgemäße Leuchtvorrichtung für ein Kraftfahrzeug umfasst ein Leuchtmodul mit einer Linse, einen Lichtaustrittsbereich aufweist, wobei dem Lichtaustrittsbereich mindestens eine erste Lichtfunktion zugeordnet ist, einen Reflektor, der den Lichtaustrittsbereich zumindest teilweise, unmittelbar benachbart umgibt, und ein Lichtleitelement, dem eine weitere Lichtfunktion zugeordnet ist, wobei ein Einkoppelbereich des Lichtleitelements vor einem Leuchtmittel angeordnet ist und ein Auskoppelbereich des Lichtleitelements am Reflektor angeordnet ist.

Durch die Anordnung des Lichtleitelements in dem unterstützenden Reflektor kann das Lichtleitelement in unmittelbarer Nähe des Leuchtenmoduls angeordnet werden, was einen kompakten Aufbau und weitgehende gestalterische Freiheit bei einfachem Aufbau erlaubt.

Der Auskoppelbereich weist eine dem Reflektor abgewandte erste Auskoppelfläche und eine dem Reflektor zugewandte zweite Auskoppelfläche auf. Die beidseitige Nutzung des Lichtleitelements erlaubt eine höhere Lichtausbeute und eine gute Anpassung und Optimierung des Lichtflusses beziehungsweise der Lichtverteilung.

Das Lichtleitelement ist formschlüssig mit dem Reflektor verbunden. Diese Verbindung zum Beispiel in Form einer Rast- und/oder Klemmverbindung ist einfach herzustellen und benötigt keinen zusätzlichen Bauraum. Der Formschluss kann über die ganze Länge des Reflektors oder nur über einen oder mehrere Bereiche ausgebildet sein.

In dem Reflektor sind Prismen zur Lichtführung angeordnet. Mittels der Prismen kann die Reflektion des ausgekoppelten Lichts gezielt eingestellt werden.

In dem Lichtleitelement sind Prismen zur Lichtführung angeordnet. Mittels der Prismen kann insbesondere die Lichtauskopplung detailliert angepasst werden.

Der Reflektor weist ein dem Lichtaustrittsbereich zugewandtes Abschattungselement auf. Dies verhindert eine Beeinflussung oder Beeinträchtigung der Lichtfunktionen untereinander. Insbesondere wird eine unter Umständen sicherheitsrelevante Einkopplung des Tagfahrlichts in das Fern- oder Abblendlicht verhindert.

Der Reflektor und das Lichtleitelement sind in Lichtabstrahlrichtung hinter den Lichtaustrittsbereich angeordnet. Damit kann die Trennung der ersten Lichtfunktion von der zweiten Lichtfunktion nochmals verbessert werden.

Das Lichtleitelement kann in einem dem Reflektor zugewandten Bereich spitz zulaufen und in einem rinnenförmigen Aufnahmebereich des Reflektors angeordnet sein. Diese Ausgestaltung führt zu einem besseren Formschluss und kann die Lichtauskopplung in Richtung des Reflektors optimieren.

In einem Nichtaustrittsbereich des Reflektors und/oder des Lichtleitelements können keine Prismen in dem Reflektor und/oder dem Lichtleitelement angeordnet sein. So können Dunkelbereiche erzeugt werden, aus denen kein Licht, nur wenig Licht oder Licht lediglich unter speziellen Winkeln, zum Beispiel seitlich gerichtet, abgestrahlt wird.

Das Leuchtenmodul kann einen Kühlkörper umfassen, der ausgebildet ist, Leuchtmittel der ersten Lichtfunktion und/oder Leuchtmittel der zweiten Lichtfunktion zu kühlen. Dies bietet den Vorteil, dass Wärme der Leuchtmittel gut abtransportiert werden kann. Wenn der Kühlkörper ausgebildet ist Leuchtmittel der ersten und der zweiten Lichtfunktion zu kühlen, so vermindert dies vorteilhaft die Komplexität des Leuchtenmoduls und somit der Leuchtvorrichtung. Leuchtmittel der ersten Lichtfunktion und Leuchtmittel der zweiten Lichtfunktion können auf einer gemeinsamen Platine angeordnet sein. Die Komplexität des Leuchtenmoduls und somit der Leuchtvorrichtung wird dadurch weiter reduziert. Ferner wird die Herstellung der Leuchtvorrichtung erleichtert, da die Platine mit den Leuchtmitteln als Modul herstellbar ist. Ebenfalls wird die Kühlung der Leuchtmittel erleichtert, wenn beispielsweise die Platine von dem Kühlkörper gekühlt wird.

Die Leuchtmittel der ersten und zweiten Lichtfunktion können jeweils Leuchtdioden sein, die auf der Platine angeordnet sind und mit dem Kühlkörper kühlbar sind. Dies reduziert vorteilhaft den erforderlichen Bauraum. Zudem wird die Flexibilität hinsichtlich der realisierbaren Lichtfunktionen erhöht. Mit derartigen Leuchtmitteln ist ferner ein modern anmutendes Lichtdesign erzeugbar.

Ein oder mehrere Einkoppelbereiche des Lichtleitelements können relativ zu jeweils einem Leuchtmittel der zweiten Lichtfunktion über einen Adapter positionierbar sein. Dies bietet diverse Vorteile. So wird die Montage und Demontage signifikant erleichtert. Dies ist beispielsweise bei der Herstellung oder im Ersatzteilfall besonders hilfreich. Ferner lassen sich die Einkoppelbereiche und die Leuchtmittel so besonders gut zueinander ausrichten. Auch wird auf diesem Wege einem Qualitätssicherungsaspekt Sorge getragen, da durch den Adapter auch eine konstruktionsimmanente Vermeidung von Montagefehlern erfolgt.

Weiterhin kann das Lichtleitelement mit dem Adapter an dem Kühlkörper und/oder der Platine befestigt werden. Dies erleichtert weiter die Montage und reduziert die Komplexität der Konstruktion.

Das Leuchtenmodul kann einen Kühlkörper und ein an dem Kühlkörper befestigtes und thermisch angebundenes Projektionsmodul aufweisen, wobei das Projektionsmodul einen Linsenhalter und in dem Lichtaustrittsbereich eine daran befestigte Linse umfasst und der Reflektor an dem Linsenhalter befestigt sein kann. So kann zum Beispiel auch für Xenon-Leuchten eine kompakte Bauweise erreicht werden.

Ein Tragrahmen kann zur schwenkbaren und/oder neigbaren Aufnahme einer Baugruppe, aufweisend das Leuchtenmodul, den Reflektor und das Lichtleitelement, vorgesehen sein. Dies ermöglicht ein Kurvenlicht und/oder eine Leuchtweitenregulierung. Bei allen Bewegungen bleibt die Position des Lichtleitelements zu dem Leuchtenmodul fix, was eine kompakte Bauweise auch hier ermöglicht und zu einem einheitlichen Design beiträgt.

Die mindestens erste Lichtfunktion kann einem Abblendlicht und/oder Fernlicht entsprechen.

Die weitere Lichtfunktion kann einem Tagfahrlicht und/oder Positionslicht entsprechen. Tagfahrlichter erhöhen die Sichtbarkeit eines Kraftfahrzeugs im Straßenverkehr auch am Tag und können im Wettbewerb als optisches Alleinstellungsmerkmal fungieren.

Die verschiedenen in dieser Anmeldung genannten Ausführungsformen der Erfindung sind, sofern im Einzelfall nicht anders ausgeführt, mit Vorteil miteinander kombinierbar.

Die Erfindung wird nachfolgend in Ausführungsbeispielen anhand der zugehörigen Zeichnungen erläutert. Es zeigen:
- Figur 1: eine Explosionsdarstellung einer beispielhaften Leuchtvorrichtung für ein Kraftfahrzeug;
- Figur 2: eine seitliche Darstellung der Leuchtvorrichtung;
- Figur 3: eine Vorderansicht der Leuchtvorrichtung;
- Figur 4: eine Schnittdarstellung der Leuchtvorrichtung gemäß der Linie bb in Figur 3;
- Figur 5: eine perspektivische Darstellung eines Reflektors der Leuchtvorrichtung; und
- Figur 6: eine Draufsicht einer beispielhaften, schwenkbaren Leuchtvorrichtung für ein Kraftfahrzeug.

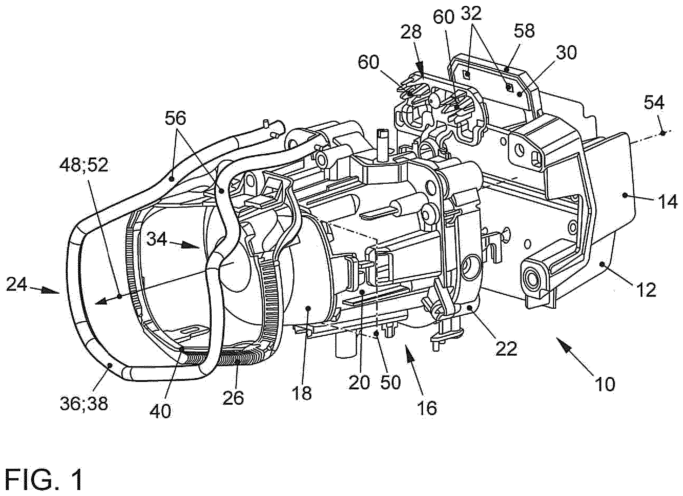

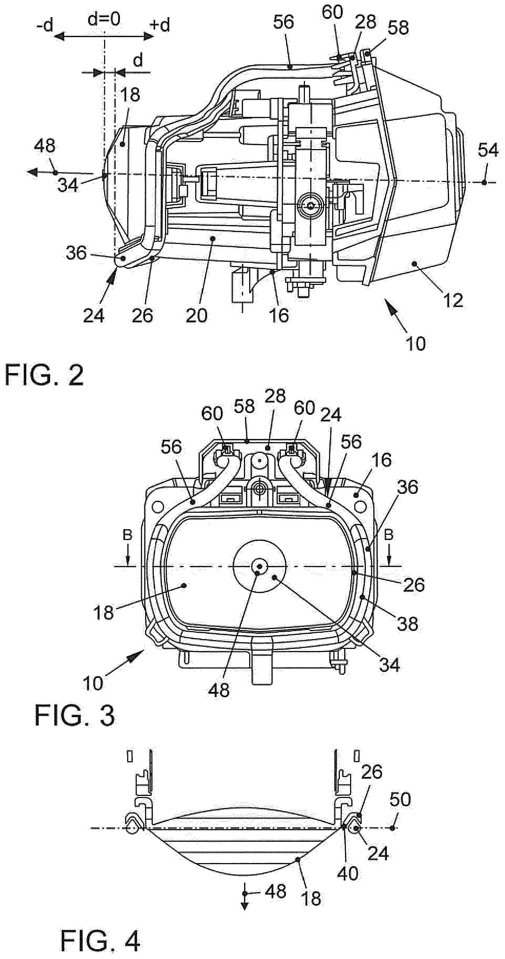

Figur 1 zeigt beispielhaft eine Leuchtvorrichtung 10 für ein Kraftfahrzeug. Die Leuchtvorrichtung 10 ist dazu eingerichtet, an einer Vorderseite eines Kraftfahrzeuges montiert zu werden und den in Fahrtrichtung vor dem Fahrzeug liegenden Bereich auszuleuchten. Die Fahrtrichtung und eine Lichtabstrahlrichtung 48 der Leuchtvorrichtung 10 stehen daher in einer festen oder definierbaren geometrischen Beziehung zueinander. Vorzugsweise sind sie stets identisch. Die Lichtabstrahlrichtung 48 ist untenstehend näher definiert. Die Leuchtvorrichtung 10 umfasst einen Kühlkörper 12, der beispielsweise mehrere Kühlrippen 14 aufweisen kann. An dem Kühlkörper 12 ist ein Projektionsmodul 16 der Leuchtvorrichtung 10 befestigt. In Figur 1 ist aus Gründen der Übersichtlichkeit die Leuchtvorrichtung 10 in Explosionsdarstellung dargestellt, was einem Zustand vor der Montage der Leuchtvorrichtung 10 entspricht. Bei der fertigen, dass heißt montierten Leuchtvorrichtung 10, sind die einzelnen Bestandteile miteinander verbunden. Dies ist beispielhaft in den Figuren 2 und 3 dargestellt.

Das Projektionsmodul 16 umfasst eine Linse 18, die von einem Linsenhalter 20 gehalten wird. Der Linsenhalter 20 ist an einem Rahmen 22 angeordnet. Anhand des Rahmens 22 ist das Projektionsmodul 16 an dem Kühlkörper 12 befestigt. Weitere Bestandteile des Projektionsmodules 16, wie beispielsweise eine Shutterblende, Vorsatzoptiken für ein Abblendlicht und/oder Fernlicht sowie eine Platine und Leuchtmittel sind aus Gründen der Übersichtlichkeit nicht dargestellt. Das Projektionsmodul 16 kann beispielsweise ein Xenon-Modul, Gashochdruck-Modul oder ähnliches Modul sein. Das Projektionsmodul 16 oder allgemeiner ausgedrückt, das Leuchtmodul umfasst einen Lichtaustrittsbereich 34, der hier durch die Linse 18 beziehungsweise einen Teil der Linse 18 gebildet ist. Das Projektionsmodul 16 bietet mindestens eine erste Lichtfunktion. In diesem Beispiel bietet das Projektionsmodul 16 zwei erste Lichtfunktionen, nämlich das Abblendlicht und das Fernlicht. Die Lichtabstrahlrichtung 48 ist definiert durch die optischen Eigenschaften der Linse 18. In diesem Ausführungsbeispiel ist die Linse 18 ausgebildet, in sie eingestrahltes Licht entlang beziehungsweise parallel zu einem Flächenvektor ihrer Hauptebene 50 abzustrahlen. Mit anderen Worten, verläuft die Lichtabstrahlrichtung normal zu der Hauptebene 50 der Linse 18. Aus Klarheitsgründen sei angemerkt, dass, sofern eine Linse mehr als eine Hauptebene besitzt, die Lichtabstrahlrichtung normal zu all diesen Hauptebenen verläuft. Bei einem Bündel von Lichtstrahlen ist es dem Fachmann ohne weiteres verständlich, dass er einen Mittelwert als Lichtabstrahlrichtung 48 heranzieht. Bevorzugt ist die Lichtabstrahlrichtung 48 identisch mit einer optischen Achse 52 der Linse 18. All diese Zusammenhänge sind dem Fachmann aus der paraxialen Optik gut bekannt. Die beschriebene technische Lehre vermag er auch auf Linsensysteme zu übertragen. Ferner ist ihm ohne weiteres bewusst, dass im Falle von Linsensystemen die Hauptebene derjenigen Linse entscheidend für die Lichtabstrahlrichtung ist, durch welche das Licht als letztes hindurchtritt, bevor es in die Umwelt abgestrahlt wird. Die geometrische Beziehung der Lichtabstrahlrichtung 48 mit dem Linsenhalter 20, dem Projektionsmodul 16 und letztendlich der gesamten Leuchtvorrichtung 10 hängt von der Einbausituation der Linse 18 ab. In diesem Ausführungsbeispiel entspricht die Lichtabstrahlrichtung 48 bevorzugt auch einer Längsachse 54 der Komponenten 10, 16, 20 beziehungsweise der Leuchtvorrichtung 10 insgesamt.

Zur Ausbildung einer weiteren oder zweiten Lichtfunktion, nämlich eines Tagfahrlichts und/oder Positionslichts ist ein Lichtleitelement 24 beispielsweise in Form eines Lichtleiters vorgesehen. Das Lichtleitelement 24 ist bevorzugt als ein länglicher zylinderförmiger Lichtleiter ausgebildet. Der längliche zylinderförmige Lichtleiter kann hinsichtlich seiner räumlichen Erstreckung eine Freiform aufweisen. Beispielsweise kann eine Längsachse des länglichen zylinderförmigen Lichtleiters eine räumlich mehrfach in unterschiedlichen Dimensionen gekrümmte Linie darstellen. Der Lichtleiter kann einteilig oder mehrteilig ausgebildet sein Der Lichtleiter kann beispielsweise ein Kunststoffbauteil sein. Das Lichtleitelement 24 ist zumindest teilweise in einem Reflektor 26 geführt, eingefasst oder auf sonstige Weise in einer definierten Position und Orientierung zu dem Reflektor 26, insbesondere in Lichtabstrahlrichtung 48 vor dem Reflektor 26, angeordnet. Das Lichtleitelement 24 hat zwei miteinander über einen Lichtauskoppelbereich 36 verbundene Lichtleitarme 56. Der Lichtauskoppelbereich 36 wird beispielsweise durch Auskoppelelemente wie Prismen 38 gebildet. Diese können entlang des Lichtleitelements 24 angeordnet sein und ausgebildet sind, Licht im Innern des Lichtleitelements 24 derart umzulenken, dass es aus diesem austritt. Die Lichtleitarme 56 besitzen selbst keine lichtauskoppelnden Eigenschaften. Die Lichtleitarme 56 werden über einen Adapter 28 positioniert und mit diesem an dem Kühlkörper 12 befestigt. Dazu ist an einem Aufnahmeabschnitt 58 des Kühlkörpers 12 eine Platine 30 angeordnet. Die Platine 30 weist ein oder mehrere Leuchtmittel auf. Bevorzugt weist die Platine 30 mehrere Leuchtmittel in Form von Leuchtdioden auf. Die Leuchtdioden dienen bevorzugt sowohl der ersten Lichtfunktion, als auch der zweiten Lichtfunktion. Weiterhin bevorzugt sind die Leuchtdioden hinsichtlich der ersten Lichtfunktion zur Erzeugung des Abblendlichts vorgesehen und hinsichtlich der zweiten Lichtfunktion zur Erzeugung des Tagfahrlichts beziehungsweise Positionslichts. Alle verwendeten Leuchtmittel sind bevorzugt auf derselben Platine 30 vorgesehen. Hinsichtlich der ersten Lichtfunktion können zusätzlich Leuchtdioden zur Erzeugung des Fernlichts vorgesehen sein, bevorzugt ebenfalls auf der Platine 30. Bevorzugt sind alle diese Leuchtmittel gemeinsam über den Kühlkörper 12 kühlbar. In dem in Figur 1 gezeigten Ausführungsbeispiel weist die Platine 30 zwei Leuchtmittel 32 auf. Die Leuchtmittel 32 sind als Leuchtdioden ausgebildet. Der Adapter 28 zur Aufnahme der Lichtleiterarme 56 ist derart gestaltet, dass ein, vorzugsweise zwei Ankoppelbereiche mit Lichteinkoppelflächen des Lichtleitelementes 24 vor den Leuchtmitteln 32 angeordnet sind. Bevorzugt emittieren alle Leuchtmittel 32 Licht in dieselbe Richtung, vorzugsweise in die Lichtabstrahlrichtung 48, die in diesem Ausführungsbeispiel der Fahrtrichtung entspricht. Der Adapter 28 ist zweckmäßigerweise in Fahrtrichtung vor der Platine 30 angeordnet. Der Adapter 28 dient insbesondere der Ausrichtung der Lichteinkoppelflächen der Lichtleiterarme 56 zu den Leuchtmitteln 32. Bevorzugt besitzt der Adapter 28 hierzu zentrierend Aufnahmen 60. Mit diesen zentrierenden Aufnahmen 60 können die Lichtleiterarme 56 des Lichtleitelements 24 entgegen der Lichtabstrahlungsrichtung 48 beziehungsweise der Fahrtrichtung an den Adapter 28 herangeführt werden und mit diesem sicher verbunden werden. Bevorzugt sind die Lichteinkoppelflächen über den Adapter 28 parallel zueinander anordenbar. Besonders bevorzugt liegen sie in einer Ebene, die beispielsweise parallel zur Hauptebene 50 der Linse 18 angeordnet sein kann. Eine derartige Anordnung erleichtert die relative Ausrichtung der Lichteinkoppelflächen zu den Leuchtmitteln 32. Wenn die Leuchtmittel 32 beispielsweise auf der Platine 30 ebenfalls in einer Ebene angeordnet sind, muss lediglich noch eine Ebene des Adapters 28 zu der Ebene der Leuchtmittel 32 ausgerichtet werden. Das Lichtleitelement 24 kann mit dem Adapter 28 auch bei einem weitgehend vormontiertem Projektionsmodul 10 auf einfache Weise an diesem angebracht werden. Anders ausgedrückt kann das Lichtleitelement 24 bei der Leuchtvorrichtung 10 für das Kraftfahrzeug von vorne, also entgegen der Lichtabstrahlungsrichtung 48, aufgesteckt werden. Somit ist es über den Adapter 28 sicher vor den Leuchtmitteln 32 und vor dem Reflektor 36 positioniert. Das Licht der Leuchtmittel 32 ist in die Lichteinkoppelflächen der beiden Lichtleiterarme 56 einkoppelbar. Somit ergibt sich ein besonders gleichmäßiges Erscheinungsbild der zweiten Lichtfunktion.

Das Licht für den Betrieb des Tagfahrlichts beziehungsweise des Positionslichts wird von den beiden Leuchtmitteln 32 erzeugt. Das Tagfahrlicht und das Positionslicht werden gewissermaßen durch zwei optische Elemente ermöglicht, einem ersten optischen Element, nämlich dem Lichtleitelement 24 und einem zweiten optischen Element, nämlich dem Reflektor 26. In das Lichtleitelement 24 tritt das von den Leuchtmitteln 32 emittierte Licht ein und pflanzt sich durch Totalreflektion innerhalb des Lichtleitelementes 24 fort. Das Lichtleitelement 24 weist zum Beispiel eine dem Reflektor 26 abgewandte erste Auskoppelfläche im Auskoppelbereich 36 auf, über die in Fahrtrichtung Licht ausgekoppelt wird. Eine zweite, dem Reflektor 26 zugewandte Auskoppelfläche koppelt einen Teil des Lichts in Richtung des Reflektors 26 aus. Der Reflektor 26 mit einer zum Beispiel verchromten in Fahrtrichtung gewandten Oberfläche reflektiert nun diesen Teil des ausgekoppelten Lichtes derart, dass es diffus abgestrahlt wird. Somit wird ein Teil des Tagfahrlichtes direkt aus dem Lichtleitelement 24 ausgekoppelt und ein weiterer Teil wird über den Reflektor 26 abgestrahlt.

Das Lichtleitelement 24 ist derart in den Reflektor 26 eingefasst, dass das aus dem Auskoppelbereich 36 des Lichtleitelements 24 ausgekoppelte Licht der zweiten Lichtfunktion (Tagfahrlicht oder Positionslicht) an der Projektionslinse 18 vorbei geführt wird. Mit anderen Worten ausgedrückt, es tritt kein Licht aus dem Lichtleitelement 24 und / oder dem Reflektor 26 durch die Projektionslinse 18 in das Innere des Projektionsmoduls 16 ein. Bevorzugt ist der Reflektor 26 dabei derart ausgestaltet, dass das Tagfahrlicht oder Positionslicht, das heißt das Licht des Lichtleitelements 24, nicht in die Linse 18 eingekoppelt werden kann. Dies kann mit einem zwischen dem Lichtaustrittsbereich 34 beziehungsweise der Linse 18 und dem Auskoppelbereich 36 des Lichtleitelements 24 angeordneten Abschattungselement 40 realisiert sein. Insbesondere wird so auch vermieden, dass Licht aus der Linse 18 durch den Auskoppelbereich 36 in den Reflektor 26 und / oder das Lichtleitelement 24 gelangt. Störende Reflexionen werden dadurch vermieden. Bevorzugt kann der Reflektor 26 als Abschattungselement 40 entsprechende Ausformungen aufweisen, welche das Lichtleitelement 24 an einer der Linse 18 beziehungsweise dem Lichtaustrittsbereich 34 zugewandten Seite ausreichend weit umschließen. Hinsichtlich der störenden Reflexionen, die durch eine solche Ausführungsform der Erfindung vermieden werden können, ist zwischen zwei Betriebsarten der Leuchtvorrichtung 10 zu unterscheiden. In einer ersten Betriebsart sind die erste Lichtfunktion, nämlich das Abblendlicht oder auch das Fernlicht, in Verbindung mit der zweiten Lichtfunktion in Form des Positionslichts aktiv. Wenn hinsichtlich der ersten Lichtfunktion nur das Abblendlicht betrieben wird, gilt es zu vermeiden, dass Licht des Abblendlichts aus der Linse 18 in das Lichtleitelement 24 oder den Reflektor 26 gelangt und von diesem unkontrolliert reflektiert wird. In einer zweiten Betriebsart ist nur die zweiten Lichtfunktion aktiv, nämlich das Tagfahrlicht oder das Positionslicht. Hier gilt es zu vermeiden, dass Licht des Tagfahrlichts oder des Positionslichts aus dem Lichtleitelement 24 oder dem Reflektor 26 in die Linse 18 gelangt und von dieser oder von Komponenten im Innern des Projektionsmoduls 16 unkontrolliert reflektiert wird. So kann beispielsweise vermieden werden, dass die Linse 18 ungewollt mit zum Leuchten gebracht wird. Der Reflektor 16, der im Sinne der Erfindung ausgestaltet ist, stellt sicher, dass solche Probleme vermieden werden. Es können auch zusätzliche Blenden vorgesehen sein. Bevorzugt ist eine solche Blende als Abschattungselement 40 integraler Bestanteil des Reflektors 26.

Figur 2 zeigt die Leuchtvorrichtung 10 aus Figur 1 in montierten Zustand. Dass heißt, dass das Projektionsmodul 16 an dem Kühlkörper 12 befestigt ist. Weiterhin ist der Reflektor 26 an dem Projektionsmodul 16 befestigt. Vorzugsweise ist der Reflektor 26 an dem Linsenhalter 20 befestigt. Das Lichtleitelement 24 ist formschlüssig mit dem Reflektor 26 verbunden. Die formschlüssige Verbindung kann beispielsweise über eine Rastverbindung realisiert sein. Es ist ausreichend, dass zumindest der Auskoppelbereich 36 oder ein Anteil des Auskoppelbereiches 36 des Lichtleitelementes 24 in dem Reflektor 26 angeordnet ist. Weitere Bereiche des Lichtleitelementes 24, wie beispielsweise die zu dem Adapter 28 führenden Lichtleitarme 56, müssen nicht in dem Reflektor 28 angeordnet sein. Oberhalb des Auskoppelbereichs 36 ist in der vorliegenden Ansicht erkennbar, dass das Abschattungselement 40 des Reflektors 26 zwischen der Linse 18 und dem Lichtleitelement 24 angeordnet ist.

Weiter ist in Figur 2 der Lichtaustrittsbereich 34 der Leuchtvorrichtung 10 beziehungsweise des Projektionsmoduls 16 dargestellt. Der Lichtaustrittsbereich 34 kann einem Teil oder der ganzen Oberfläche der Linse 18 entsprechen. Der Lichtaustrittsbereich 34 ist derjenige Bereich, aus dem das Licht der ersten Lichtfunktion austritt. Wie zu sehen ist, sind der Reflektor 26 und das Lichtleitelement 24 in Lichtabstrahlrichtung 48 beziehungsweise der Fahrtrichtung hinter dem Lichtaustrittsbereich 34 in einem Abstand d angeordnet. Dieser beträgt bevorzugt bis + 20 mm. Betrachtet man den Reflektor 26 und des Lichtleitelement 24 hilfsweise als eine Baugruppe, so würden negative Werte des Abstands d einer abschnittsweisen Anordnung dieser Baugruppe in Lichtabstrahlrichtung 48 vor dem Lichtaustrittsbereich 34 entsprechen. Ein Abstand d von Null würde einer Anordnung dieser Baugruppe bündig mit dem Lichtaustrittsbereich 34 entsprechen. Positive Werte entsprechen einer erfindungsgemäßen Anordnung, wie sie in Figur 2 gezeigt ist, wobei die Baugruppe hinter dem Lichtaustrittsbereich 34 angeordnet ist. Durch den Abstand d kann die Trennung der ersten Lichtfunktion von der zweiten Lichtfunktion bei Bedarf nochmals verbessert werden. Es sind auch Werte des Abstands d außerhalb des gegebenen Intervalls möglich, sowie beliebige Zwischenwerte innerhalb des Intervalls. Der Zuständige Fachmann legt selbstständig fest, wie groß der Abstand d sein muss. Dabei zieht er die konkret vorliegenden Bauraumverhältnisse, die Gestalt der verbauten Teile, Designanforderungen, funktionale Anforderungen und sonstige Entwicklungsanforderungen hinsichtlich der ersten und zweiten Lichtfunktion in Betracht. Er trifft die Entscheidungen hinsichtlich des Abstands d dann derart, dass die erste und zweite Lichtfunktion in allen Betriebsarten mit hinreichender Qualität gewährleistet sind.

In Figur 3 ist eine Vorderansicht der Leuchtvorrichtung 10 aus Figur 1 dargestellt. Das Lichtleitelement 24 umgibt die Linse 18 beziehungsweise den Lichtaustrittsbereich 34 des Projektionsmoduls 16 etwa ringförmig. Die Anordnung lässt sich auch durch den Begriff "schlaufenförmig" charakterisieren. Das Lichtleitelement 24 umfasst etwa ¾ der Umfangfläche der Linse 18. Alternativ kann die Umfangsfläche vollständig, zur Hälfte oder zu einem Viertel umfasst sein. Auch zwischen diesen genannten Schritten liegende Umfassungen sind möglich. Der zuständige Fachmann legt den Grad der Umfassung anhand von Designvorgaben für die Lichtfunktionen sowie von Bauraumverhältnissen und weiteren technischen Anforderungen und Bedingungen fest, die sich aus dem konkreten technischen Gesamtsystem ergeben.

Der Reflektor 26 ist unmittelbar benachbart zu der Linse 18 des Projektionsmoduls 16 angeordnet. Dies bedeutet, dass sich keine weiteren Bauelemente zwischen diesen Bestandteilen der Leuchtvorrichtung 10 befinden und dass der Reflektor 26 in unmittelbarer Nähe des Projektionsmoduls 16 angeordnet ist. Der Reflektor 26 kann direkt an dem Projektionsmodul 16 anliegen. Vorzugsweise sind der Reflektor 26 und das Projektionsmodul 16 durch ein übliches minimales Spaltmaß, beispielsweise im Bereich von einem Millimeter, beabstandet.

In dem Auskoppelbereich 36 des Lichtleitelementes 24 sind die Prismen 38 für die Lichtauskopplung angeordnet. Zur besseren Darstellung sind die Prismen 38 durch eine in dem Lichtleitelement 24 oder genauer gesagt in dem Auskoppelbereich 36 des Lichtleitelementes 24 mittig angeordnete Linie dargestellt. In Bereichen des Lichtleitelementes 24, in denen kein Licht ausgekoppelt werden soll, sind keine Prismen angeordnet. Solche Bereiche werden beispielsweise durch die Lichtleiterarme 56 gebildet, die als Zuführung zu dem Adapter 28 dienen.

Figur 4 zeigt eine Schnittdarstellung durch die Linse 18, das Lichtleitelement 24 und den Reflektor 26 der Leuchtvorrichtung 10 aus Figur 1. In diesem Beispiel läuft das Lichtleitelement 24 in einen dem Reflektor 26 zugewandten Bereich spitz zu. Beispielsweise hat das Lichtleitelement 24 einen wenigstens anteilig u- beziehungsweise v-förmigen Querschnitt. Der Reflektor 26 hat einen dazu korrespondierenden, beispielsweise rinnenförmigen Aufnahmebereich. Dieser Aufnahmebereich ist vorzugsweise beschichtet, so dass der Lichtanteil, der aus dem Lichtleitelement 24 in Richtung des Reflektors 26 austritt von dort diffus reflektiert wird. Zwischen dem Lichtleitelement 24 und der Linse 18 weist der Reflektor 26 ein Abschattungselement 40 auf. Das Abschattungselement 40 ist von Material und Geometrie derart ausgebildet, dass ein Lichtübertritt zwischen dem Lichtleitelement 24 und der Linse 18 verhindert wird. Das Abschattungselement 40 kann entlang des Reflektors 26 durchgängig ausgebildet sein oder lediglich in bestimmten kritischen Bereichen, in denen Licht aus der Linse 18 in den Reflektor 26 und / oder das Lichtleitelement 24 gelangen könnte oder umgekehrt.

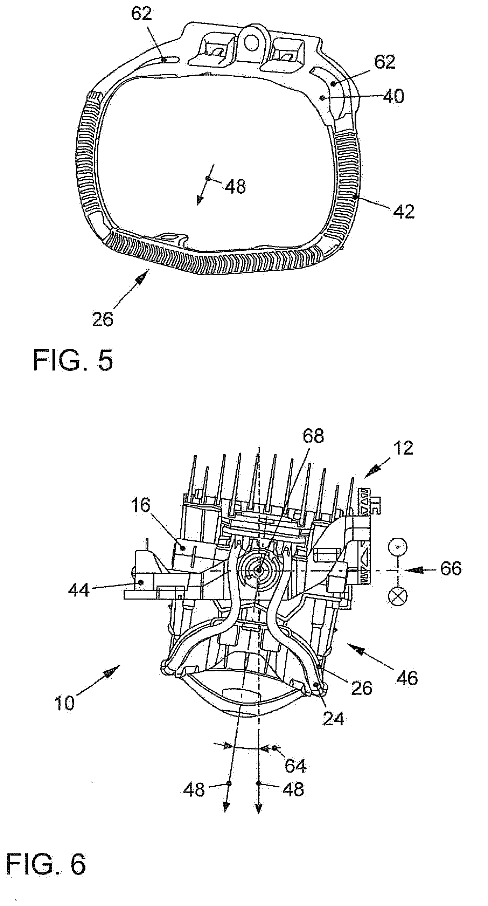

In Figur 5 ist eine räumliche Darstellung des Reflektors 26 der Leuchtvorrichtung 10 aus Figur 1 gezeigt. Im oberen Bereich des Reflektors 26 ist ein weiteres Abschattungselement 40 ausgebildet. Hinter diesem Abschattungselement 40 befindet sich eine Öffnung 62, durch welche das Lichtleitelement 24 geführt werden kann. Analog zu dem Abschattungselement 40 aus Figur 1 ist das weitere Abschattungselement 40 dann zwischen der Linse 18 und dem Lichtleitelement 24 angeordnet. In Reflektionsbereichen, in denen das Licht in Lichtabstrahlrichtung 48 die Signatur abbilden soll, sind Prismen 42 ausgebildet. In den übrigen Bereichen werden die Prismen ausgespart, um kein Streulicht oder keine Lichtleckage hinter dunkel anmutenden Designblenden zu erzeugen. Der Querschnitt des Reflektors 26 ist derart bemessen und ausgestaltet, dass das Lichtleitelement 24 formschlüssig gehalten wird und ein Teil des Lichts aus dem Lichtleitelement 24 in Lichtabstrahlrichtung 48 reflektiert werden kann. Das reflektierte Licht kann direkt abgestrahlt werden und/oder durch einen Teil des Lichtleitelements 24 verlaufen.

In Figur 6 ist eine drehbare und/oder schwenkbare Leuchtvorrichtung 10 dargestellt. Diese entspricht weitgehend der in Figur 1 bezeigten Leuchtvorrichtung 10, so dass im Folgenden nur auf die zusätzlichen oder sich unterscheidenden Merkmale eingegangen wird. Die Leuchtvorrichtung 10 umfasst hier einen zusätzlichen Tragrahmen 44, in welchem eine Baugruppe 46 dreh- und schwenkbar gelagert ist. Die Baugruppe 46 umfasst wenigstens das Projektionsmodul 16, den Reflektor 26 und das Lichtleitelement 24. Der Reflektor 26 und das Lichtleitelement 24 sind also gemeinsam mit dem Projektionsmodul 16 schwenkbar. Bevorzugt umfasst die Baugruppe 46 die gesamte in Figur 1 gezeigte Leuchtvorrichtung 10, also auch den Kühlkörper 12 und die für die erste und zweite Lichtfunktion vorgesehenen Leuchtmittel. Der Tragrahmen 44 ermöglicht somit eine Justage beziehungsweise Verstellung in horizontaler Richtung 64 und/oder vertikaler Richtung 66. Eine solche Verstellung kann auch automatisch ablaufen und beispielsweise über Sensoren, die Fahrzeugneigung und Fahrtrichtung erfassen und entsprechende Aktoren, gesteuert werden. Hierdurch kann auch eine optionale Leuchtweitenregelung realisiert werden. Diese Verstellmöglichkeiten sind beispielsweise vorteilhaft bei Kurvenfahrten oder bei Fahrten auf unebenen Untergründen, bei denen die Lichtfunktionen im Wesentlichen in Fahrtrichtung erhalten bleiben sollen. Mit anderen Worten ausgedrückt wird dadurch, dass die Baugruppe 46 gegenüber dem Tragrahmen 44 in ein oder mehreren Freiheitsgraden verschwenkbar ist erreicht, dass die Lichtabstrahlrichtung 48 des Kurvenlichts (erste Lichtfunktion, umfassend das Abblendlicht und Fernlicht) gemeinsam mit dem Tagfahrlicht beziehungsweise Positionslicht (zweite Lichtfunktion) stets in Fahrtrichtung zeigt. Somit bleibt das Erscheinungsbild des Tagfahrlichtes beziehungsweise die Positionslichtsignatur auch in Kurvendurchfahrten erhalten. Weiterhin wird die Sicht des Fahrers bei der Kurvendurchfahrt verbessert. Aus Gründen der Klarheit sei nochmals darauf eingegangen, dass die zweite Lichtfunktion, das Tagfahrlicht beziehungsweise Positionslicht, auch diffus sein kann. Wenn davon gesprochen wird, dass das Tagfahrlicht / Positionslicht in Lichtabstrahlrichtung 48 leuchtet, so ist gemeint, dass ein Wesentlicher Anteil des Tagfahrlichts in diese Richtung leuchtet. Der zuständige Fachmann legt diesen Anteil insbesondere nach Maßgabe von gesetzlichen Vorschriften sowie Design- und Sicherheitsanforderungen fest. Für einen kompakten Aufbau der Leuchtvorrichtung 10 ist ferner eine Drehachse 68 für die Verstellung horizontaler Richtung 64 zwischen den Lichtleitarmen 56 des Lichtleitelementes 24 angeordnet.

### Bezugszeichenliste

- 10: Leuchtvorrichtung
- 12: Kühlkörper
- 14: Kühlrippe
- 16: Projektionsmodul
- 18: Linse
- 20: Linsenhalter
- 22: Rahmen
- 24: Lichtleitelement
- 26: Reflektor
- 28: Adapter
- 30: Platine
- 32: Leuchtmittel
- 34: Lichtaustrittsbereich
- 36: Auskoppelbereich
- 38: Prismen
- 40: Abschattungselement
- 42: Prismen
- 44: Tragrahmen
- 46: Baugruppe
- 48: Lichtabstrahlrichtung
- 50: Hauptebene
- 52: optischen Achse
- 54: Längsachse
- 56: Lichtleitarme
- 58: Aufnahmeabschnitt
- 60: zentrierenden Aufnahmen
- 62: Öffnung
- 64: horizontale Richtung
- 66: vertikale Richtung
- 68: Drehachse
- d: Abstand

## Patentansprüche

1. Leuchtvorrichtung für ein Kraftfahrzeug, umfassend ein Leuchtmodul mit einer Linse (18), die einen Lichtaustrittsbereich (34) aufweist, wobei dem Lichtaustrittsbereich (34) mindestens eine erste Lichtfunktion zugeordnet ist, einen Reflektor (26), der den Lichtaustrittsbereich (34) zumindest teilweise, unmittelbar benachbart umgibt, und ein Lichtleitelement (24), dem eine weitere Lichtfunktion zugeordnet ist, wobei ein Einkoppelbereich des Lichtleitelements (24) vor einem Leuchtmittel (32) angeordnet ist und ein Auskoppelbereich (36) des Lichtleitelements (24) am Reflektor (26) angeordnet ist, wobei der Auskoppelbereich (36) eine dem Reflektor (26) abgewandte erste Auskoppelfläche und eine dem Reflektor (26) zugewandte zweite Auskoppelfläche aufweist, und wobei der Reflektor (26) ein dem Lichtaustrittsbereich (34) zugewandtes Abschattungselement (40) aufweist, **dadurch gekennzeichnet, dass** J das Lichtleitelement (24) formschlüssig mit dem Reflektor (26) verbunden ist, in dem Reflektor (26) Prismen (42) zur Lichtführung angeordnet sind, in dem Lichtleitelement (24) Prismen (38) zur Lichtführung angeordnet sind, der Reflektor (26) und das Lichtleitelement (24) in Lichtabstrahlrichtung (48) hinter den Lichtaustrittsbereich (34) angeordnet sind.

2. Leuchtvorrichtung nach Anspruch 1, **dadurch gekennzeichnet, dass** das Lichtleitelement (24) in einem dem Reflektor (26) zugewandten Bereich spitz zuläuft und in einem rinnenförmigen Aufnahmebereich des Reflektors (26) angeordnet ist.

3. Leuchtvorrichtung nach Anspruch 1, **dadurch gekennzeichnet, dass** in einem Nichtaustrittsbereich des Reflektors (26) und/oder des Lichtleitelements (24) keine Prismen (38,42) in dem Reflektor (26) und/oder dem Lichtleitelement (24) angeordnet sind.

4. Leuchtvorrichtung nach einem der Ansprüche 1 bis 3, **dadurch gekennzeichnet, dass** das Leuchtenmodul einen Kühlkörper (12) umfasst, der ausgebildet ist, Leuchtmittel der ersten Lichtfunktion und/oder Leuchtmittel (32) der zweiten Lichtfunktion zu kühlen.

5. Leuchtvorrichtung nach einem der Ansprüche 1 bis 4, **dadurch gekennzeichnet, dass** Leuchtmittel der ersten Lichtfunktion und Leuchtmittel (32) der zweiten Lichtfunktion auf einer gemeinsamen Platine (30) angeordnet sind.

6. Leuchtvorrichtung nach Anspruch 4 und 5, **dadurch gekennzeichnet, dass** die Leuchtmittel der ersten und zweiten Lichtfunktion jeweils Leuchtdioden sind, die auf der Platine (30) angeordnet sind und mit dem Kühlkörper (12) kühlbar sind.

7. Leuchtvorrichtung nach einem der Ansprüche 1 bis 6, **dadurch gekennzeichnet, dass** ein oder mehrere Einkoppelbereiche des Lichtleitelements (24) relativ zu jeweils einem Leuchtmittel (32) der zweiten Lichtfunktion über einen Adapter (28) positionierbar sind.

8. Leuchtvorrichtung nach Anspruch 7, **dadurch gekennzeichnet, dass** das Lichtleitelement (24) mit dem Adapter (28) an dem Kühlkörper (12) und/oder der Platine (30) befestigt werden kann.

9. Leuchtvorrichtung nach einem der Ansprüche 1 bis 8, **dadurch gekennzeichnet, dass** das Leuchtenmodul einen Kühlkörper (12) und ein an dem Kühlkörper (12) befestigtes und thermisch angebundenes Projektionsmodul (16) aufweist, wobei das Projektionsmodul (16) einen Linsenhalter (20) und in dem Lichtaustrittsbereich (34) eine daran befestigte Linse (18) umfasst, und dass der Reflektor (26) an dem Linsenhalter (20) befestigt ist.

10. Leuchtvorrichtung nach einem der Ansprüche 1 bis 9, **dadurch gekennzeichnet, dass** ein Tragrahmen (44) zur schwenkbaren und/oder neigbaren Aufnahme einer Baugruppe (46) aufweisend das Leuchtenmodul, den Reflektor (26) und das Lichtleitelement (24) vorgesehen ist.

11. Leuchtvorrichtung nach einem der Ansprüche 1 bis 10, **dadurch gekennzeichnet, dass** die mindestens erste Lichtfunktion einem Abblendlicht und/oder Fernlicht entspricht.

12. Leuchtvorrichtung nach einem der Ansprüche 1 bis 11, **dadurch gekennzeichnet, dass** die weitere Lichtfunktion einem Tagfahrlicht und/oder Positionslicht entspricht.

## Claims

1. Lighting device for a motor vehicle, comprising a lighting module having a lens (18), which has a light exit region (34), wherein at least one first light function is assigned to the light exit region (34), a reflector (26), which directly adjacently surrounds the light exit region (34), at least in part, and a light guiding element (24) to which a further light function is assigned, wherein an input coupling region of the light guiding element (24) is arranged in front of an illuminant (32) and an output coupling region (36) of the light guiding element (24) is arranged at the reflector (26), wherein the output coupling region (36) has a first output coupling surface facing away from the reflector (26) and a second output coupling surface facing the reflector (26), and wherein the reflector (26) has a shading element (40) facing the light exit region (34), **characterized in that** the light guiding element (24) is connected to the reflector (26) in a positively locking manner, prisms (42) for guiding light are arranged in the reflector (26), prisms (38) for guiding light are arranged in the light guiding element (24), the reflector (26) and the light guiding element (24) are arranged behind the light exit region (34) in the light emission direction (48).

2. Lighting device according to Claim 1, **characterized in that** the light guiding element (24) tapers in a region facing the reflector (26) and is arranged in a trough-shaped receptacle region of the reflector (26).

3. Lighting device according to Claim 1, **characterized in that** in a non-exit region of the reflector (26) and/or of the light guiding element (24) no prisms (38, 42) are arranged in the reflector (26) and/or the light guiding element (24).

4. Lighting device according to any of Claims 1 to 3, **characterized in that** the lighting module comprises a heat sink (12) configured to cool illuminants of the first light function and/or illuminants (32) of the second light function.

5. Lighting device according to any of Claims 1 to 4, **characterized in that** illuminants of the first light function and illuminants (32) of the second light function are arranged on a common circuit board (30).

6. Lighting device according to Claims 4 and 5, **characterized in that** the illuminants of the first and second light functions are in each case light-emitting diodes which are arranged on the circuit board (30) and are coolable by way of the heat sink (12).

7. Lighting device according to any of Claims 1 to 6, **characterized in that** one or a plurality of input coupling regions of the light guiding element (24) is/are positionable relative to a respective illuminant (32) of the second light function by means of an adaptor (28).

8. Lighting device according to Claim 7, **characterized in that** the light guiding element (24) can be secured to the heat sink (12) and/or the circuit board (30) by way of the adaptor (28).

9. Lighting device according to any of Claims 1 to 8, **characterized in that** the lighting module has a heat sink (12) and a projection module (16) secured and thermally linked to the heat sink (12), wherein the projection module (16) comprises a lens holder (20) and in the light exit region (34) a lens (18) secured thereto, and **in that** the reflector (26) is secured to the lens holder (20).

10. Lighting device according to any of Claims 1 to 9, **characterized in that** provision is made of a carrying frame (44) for pivotably and/or inclinably receiving an assembly (46) having the lighting module, the reflector (26) and the light guiding element (24).

11. Lighting device according to any of Claims 1 to 10, **characterized in that** the at least first light function corresponds to a dipped-beam light and/or main-beam light.

12. Lighting device according to any of Claims 1 to 11, **characterized in that** the further light function corresponds to a daytime running light and/or position light.

## Revendications

1. Dispositif d'éclairage pour véhicule à moteur, comprenant un module d'éclairage présentant une lentille (18) qui comporte une zone de sortie de lumière (34), dans lequel au moins une première fonction lumineuse est associée à la zone de sortie de lumière (34), un réflecteur (26) entourant au moins partiellement la zone de sortie de lumière (34), immédiatement adjacente, et un élément de guidage de lumière (24) auquel est associée une autre fonction lumineuse, dans lequel une zone de couplage de l'élément de guidage de lumière (24) est située devant un moyen d'éclairage (32) et une zone de découplage (36) de l'élément de guidage de lumière (24) est située sur le réflecteur (26), dans lequel la zone de découplage (36) présente une première surface de découplage tournée à l'opposé du réflecteur (26) et une seconde surface de découplage tournée vers le réflecteur (26), et dans lequel le réflecteur (26) comporte un élément d'ombrage (40) orienté vers la zone de sortie de lumière (34),
**caractérisé en ce que**
l'élément de guidage de lumière (24) est relié par complémentarité de forme au réflecteur (26), des prismes (42) destinés à guider la lumière sont disposés dans le réflecteur (26), des prismes (38) destinés à guider la lumière sont disposés dans l'élément de guidage de lumière (24),
le réflecteur (26) et l'élément de guidage de lumière (24) sont disposés derrière la zone de sortie de lumière (34) dans la direction de rayonnement lumineux (48).

2. Dispositif d'éclairage selon la revendication 1, **caractérisé en ce que** l'élément de guidage de lumière (24) se rétrécit en une pointe dans une zone tournée vers le réflecteur (26) et est disposé dans une zone de logement en forme de rainure du réflecteur (26).

3. Dispositif d'éclairage selon la revendication 1, **caractérisé en ce qu'**aucun prisme (38, 42) n'est disposé dans le réflecteur (26) et/ou l'élément de guidage de lumière (24) dans une zone de non-sortie du réflecteur (26) et/ou de l'élément de guidage de lumière (24).

4. Dispositif d'éclairage selon l'une des revendications 1 à 3, **caractérisé en ce que** le module d'éclairage comprend un dissipateur thermique (12) qui est conçu pour refroidir des moyens d'éclairage présentant la première fonction lumineuse et/ou des moyens d'éclairage (32) présentant la seconde fonction lumineuse.

5. Dispositif d'éclairage selon l'une des revendications 1 à 4, **caractérisé en ce que** des moyens d'éclairage présentant la première fonction lumineuse et des moyens d'éclairage (32) présentant la seconde fonction lumineuse sont disposés sur une carte de circuit imprimé commune (30).

6. Dispositif d'éclairage selon les revendications 4 et 5, **caractérisé en ce que** les moyens d'éclairage présentant les première et seconde fonctions lumineuses sont respectivement des diodes électroluminescentes qui sont disposées sur la carte de circuit imprimé (30) et peuvent être refroidies par le dissipateur thermique (12).

7. Dispositif d'éclairage selon l'une des revendications 1 à 6, **caractérisé en ce qu'**une ou plusieurs zones de couplage de l'élément de guidage de lumière (24) peuvent respectivement être positionnées par rapport à un moyen d'éclairage (32) présentant la seconde fonction d'éclairage par l'intermédiaire d'un adaptateur (28) .

8. Dispositif d'éclairage selon la revendication 7, **caractérisé en ce que** l'élément de guidage de lumière (24) peut être fixé au dissipateur thermique (12) et/ou à la carte de circuit imprimé (30) au moyen de l'adaptateur (28).

9. Dispositif d'éclairage selon l'une des revendications 1 à 8, **caractérisé en ce que** le module d'éclairage comporte un dissipateur thermique (12) et un module de projection (16) fixé et relié thermiquement au dissipateur thermique (12), dans lequel le module de projection (16) comprend un support de lentille (20) et, dans la zone de sortie de lumière (34), une lentille (18) fixée à celui-ci, et **en ce que** le réflecteur (26) est fixé au support de lentille (20).

10. Dispositif d'éclairage selon l'une des revendications 1 à 9, **caractérisé en ce qu'**il est prévu un châssis de support (44) destiné à recevoir de manière pivotante et/ou basculante un ensemble (46) comprenant le module d'éclairage, le réflecteur (26) et l'élément de guidage de lumière (24).

11. Dispositif d'éclairage selon l'une des revendications 1 à 10, **caractérisé en ce que** ladite au moins première fonction d'éclairage correspond à un feu de croisement et/ou à un feu de route.

12. Dispositif d'éclairage selon l'une des revendications 1 à 11, **caractérisé en ce que** l'autre fonction d'éclairage correspond à un feu de jour et/ou un feu de position.
